# EUROPÄISCHE PATENTANMELDUNG

(11) **EP 3 965 527 A1**
(43) Veröffentlichungstag der Anmeldung: **09.03.2022**
(21) Anmeldenummer: 21192714.0
(22) Anmeldetag: 24.08.2021
(51) Int. Cl.: H05B 1/02, H02J 3/00, F24H 4/02, F24H 9/1818, H02J 5/00

(54) **WÄRMEPUMPENANORDNUNG UND VERFAHREN ZU IHREM BETRIEB**

(30) Priorität: 08.09.2020 DE 102020123355
(71) Anmelder: Vaillant GmbH, 42859 Remscheid (DE)
(72) Erfinder: Wohlfeil, Arnold, 42799 Leichlingen (DE); Roth, Stefan, 42897 Remscheid (DE); Lodorf, Dominik, 50829 Köln (DE); Habenicht, Martin, 42857 Remscheid (DE)
(74) Vertreter: Popp, Carsten

(57) **Zusammenfassung**

Die Erfindung betrifft eine Wärmepumpenanordnung und ein Verfahren zu deren Betrieb mit einem Primärkreislauf (3) mit einem Kompressor (4) und einem Sekundärkreislauf (8) und/oder Pufferspeicher (9) mit mindestens einem elektrischen Heizelement (10), wobei der Kompressor (4) und das Heizelement (10) elektronische Komponenten (11, 12, 13, 14, 15, 16, 17, 18) zu ihrer Stromversorgung und ihrem Betrieb aufweisen und wobei Kompressor (4) und Heizelement (10) mindestens eine der folgenden elektronischen Komponenten gemeinsam haben: einen Gleichrichter (13) zur Gleichrichtung eines 1- bis 3-phasigen Wechselstromes, einen aktiven Leistungsfaktorkorrekturfilter (12), einen Überspannungsschutz (11), eine Leistungsverteilung (22), einen Gleichspannungs-Zwischenkreis (14) und/oder einen Zwischenkreis-Kondensator (15) und wobei eine Leistungsverteilung (22) vorhanden ist, die den Kompressor und das elektrische Heizelement (10) so ansteuert, dass beide zusammen nie mehr als eine von den gemeinsam benutzten Komponenten (11, 12, 13 und/oder 14) maximal zur Verfügung stehende elektrische Leistung verbrauchen. Ein Zusatzheizer (20) kann bei Bedarf zugeschaltet werden. Insbesondere kann eine Gleichspannungsquelle (23) z. B. eine Photovoltaikanlage, zur Versorgung eines Gleichspannungs-Zwischenkreises (14) angeschlossen werden.

## Beschreibung

Die Erfindung betrifft eine Wärmepumpenanordnung und Verfahren zu ihrem Betrieb. Insbesondere beschäftigt sich die vorliegende Erfindung mit einem kostengünstigen und effektiven Aufbau und Betrieb einer Wärmepumpenanlage. Solche Anlagen werden z. B. eingesetzt, um Gebäude zu beheizen, zu kühlen und/oder Brauchwasser zu erwärmen. Dabei wird der Umgebung mittels mindestens eines Umgebungs-Wärmetauschers Wärme/Kälte entzogen. Eine Wärmepumpe benötigt für ihre Funktion einen Kompressor, der typischerweise mit elektrischem Strom betrieben wird. Mit der Zeit wurden solche Anlagen immer weiter verbessert und mit zusätzlichen Einrichtungen erweitert. Die häufigsten Wärmepumpenanordnungen haben einen Primärkreislauf, mindestens einen über einen Wärmetauscher daran angekoppelten Sekundärkreislauf und oft auch einen Pufferspeicher. Es gibt jedoch auch Anordnungen mit nur einem Kreislauf, insbesondere bei Klimaanlagen zur Kühlung und Erwärmung von Gebäuden. Diese übertragen Wärme oder Kälte aus der Umgebungsluft an die Luft im Inneren eines Gebäudes.

Es kann vorgesehen sein, leistungsfähige und sparsame Kompressoren aus einem 1- oder 3-phasigen Wechselstrom-Versorgungsnetz mit Strom zu versorgen, wobei die Leistung stufenlos geregelt werden kann. Dies erfordert einige, zum Teil komplexe, elektronische Bauteile, die auch einen erheblichen Kostenfaktor darstellen. So wird der Wechselstrom zunächst gleichgerichtet, der entstehende Gleichstrom in einen Gleichspannungs-Zwischenkreis eingespeist und von dort über eine Inverter-Ausgangsstufe wieder in stufenlos regelbaren Wechselstrom umgewandelt, der einen Kompressor-Motor versorgt. Je höher die Spannung des Gleichspannungs-Zwischenkreises im Rahmen der technischen Möglichkeiten gewählt wird, desto geringer sind die dort fließenden Ströme, was zu Kosteneinsparungen bei den notwendigen Leitungen führen kann. Auch wenn vorhandene Systeme beispielsweise für 200 V [Volt] ausgelegt sind, werden in Zukunft Spannungen zwischen 400 und 800 V angestrebt. Hierfür gibt es entsprechende elektronische Versorgungssysteme für Kompressor-Motoren und dergleichen.

Selbst bei hochwertigen Wärmepumpenanlagen, die Erdwärme, Umgebungswärme aus der Luft und/oder andere Wärmespeicher nutzen, kann es aber Bedingungen geben, bei denen die so gewonnene Wärme nicht für den gewünschten Heizungszweck ausreicht, oder es muss Vorsorge gegen Einfrieren von Anlageteilen bei ungewöhnlichen Betriebssituationen getroffen werden. Aus diesem Grund können elektrische Heizelemente eingesetzt werden, die an geeigneter Stelle, z. B. in einem Pufferspeicher oder einem Sekundärkreislauf angeordnet sind. Auch solche Heizelemente werden aus einem Wechselstrom-Versorgungsnetz mit Strom versorgt und auch dort ist es oft gewünscht, eine stufenlose Regelung der Leistung vornehmen zu können. Auch dafür sind kostenintensive elektronische Bauteile erforderlich, die an die gewünschten Aufgaben angepasst werden. So gibt es auch elektronische Versorgungssysteme für elektrische Heizelemente, die bei Bedarf parallel zu den Versorgungssystemen für Kompressor-Motoren eingebaut und betrieben wurden. Je nach dem einzelnen Anwendungsfall kann es verschiedene Einschränkungen des Betriebs geben. Nicht immer steht ein 3-phasiger Wechselstrom zur Verfügung, oder die maximal verfügbare Leistung (begrenzt durch vorhandene Leitungsquerschnitte und/oder Sicherungen) reicht nicht für einen gleichzeitigen Volllastbetrieb mehrerer Komponenten.

Ausgehend hiervon ist es Aufgabe der vorliegenden Erfindung, eine Wärmepumpenanlage zu schaffen, die bezüglich ihrer elektronischen Bauteile zur Versorgung eines Kompressor-Motors und eines elektrischen Heizelementes, die beide in gewissen Bereichen (stufenlos) modulierbar sein sollen, kostengünstig aufgebaut ist. Auch sollen Verfahren zum Betrieb angegeben werden, die einen kostengünstigen Aufbau und sicheren Betrieb der elektronischen Stromversorgung ermöglichen.

Zur Lösung dieser Aufgabe dienen eine Wärmepumpenanordnung und ein Verfahren sowie ein Computerprogrammprodukt gemäß den unabhängigen Ansprüchen. Vorteilhafte Ausgestaltungen und Weiterbildungen der Erfindung sind in den jeweiligen abhängigen Ansprüchen angegeben. Die Beschreibung, insbesondere im Zusammenhang mit den Figuren, veranschaulicht die Erfindung und gibt weitere Ausführungsbeispiele an.

Eine genaue Betrachtung bisher existierender elektronischer Versorgungssysteme von Kompressor-Motoren und elektrischen Heizelementen ergibt, dass einige der Bauteile in beiden Systemen (wenn auch möglicherweise unterschiedlich dimensioniert) vorkommen, was sich die vorliegende Erfindung zu Nutze macht. Bisher wurden Kompressor-Motor und elektrisches Heizelement als separate Komponenten angesehen, und zwar einschließlich ihrer elektronischen Bauteile. Bei genauer Betrachtung zeigt sich aber, dass beide Komponenten auch gleiche elektronische Bauteile verwenden können, jedenfalls dann, wenn das elektrische Heizelement ebenfalls in seiner Leistung (stufenlos) moduliert werden soll.

Eine hier vorgeschlagene Wärmepumpenanordnung weist einen Primärkreislauf mit einem Kompressor und mindestens einen Sekundärkreislauf und/oder Pufferspeicher mit einem elektrischen Heizelement auf, wobei der Kompressor und das Heizelement elektronische Komponenten zu ihrer Stromversorgung und ihrem Betrieb aufweisen und wobei Kompressor und Heizelement mindestens eine der folgenden elektronischen Komponenten gemeinsam haben:
(1) einen Gleichrichter zur Gleichrichtung eines 1- bis 3-phasigen Wechselstromes,
(2) einen aktiven Leistungsfaktorkorrekturfilter,
(3) einen Überspannungsschutz,
(4) eine Leistungsverteilung,
(5) einen Gleichspannungs-Zwischenkreis und/oder
(6) einen Zwischenkreis-Kondensator.

Der (geschlossene) Primärkreislauf enthält einen Kompressor, der von einem in seiner Leistung modulierbarem Kompressor-Motor angetrieben werden kann. Weiter können ein Wärmetauscher und ein Entspannungsventil im Primärkreislauf vorgesehen sein. Der Primärkreislauf kann der Umwelt Wärme entziehen, die mittels eines Wärmetauschers an mindestens einen (geschlossenen) Sekundärkreislauf mit mindestens einem Wärmeverbraucher übertragen werden kann. Der Wärmetauscher selbst und/oder der Primärkreislauf und/oder der Sekundärkreislauf können mindestens einen Pufferspeicher aufweisen, der für eine Vergleichmäßigung der Versorgung des Sekundärkreislaufs mit Wärme sorgen kann. Für den Fall, dass einmal nicht genügend Wärme aus der Umwelt zur Verfügung steht oder sogar bei Stillstand der Anlage ein Einfrieren des Sekundärkreislaufes verhindert werden soll, kann im Sekundärkreislauf und/oder im Pufferspeicher mindestens ein elektrisches Heizelement vorhanden, welches in seiner Leistung modulierbar sein sollte, damit nur die jeweils erforderliche Leistung eingespeist wird.

Es ist möglich, dass für den Kompressor und das Heizelement mehrere, insbesondere zwei, drei, vier, fünf oder sogar alle angeführten Komponenten gemeinsam genutzt werden. Je mehr Komponenten gemeinsam genutzt werden, desto kostengünstiger ist das Gesamtsystem, wobei die Dimensionierung der Komponenten eigentlich an die gemeinsame Nutzung angepasst werden müsste. Es hat sich aber bei Betrachtung von Gesamtsystemen herausgestellt, dass es praktisch keine Situationen gibt, bei denen Kompressor-Motor und elektrisches Heizelement gleichzeitig mit voller Leistung betrieben werden müssen, so dass man tatsächlich einige der bisher zweifach verwendeten Komponenten einfach einsparen kann, ohne die Dimensionierung der gemeinsam genutzten Komponenten wesentlich zu verändern. Jedenfalls kann eine Überlastung von Komponenten durch gleichzeitigen Betrieb von Kompressor und Heizelement durch eine geeignete Leistungsverteilung vermieden werden, ohne die Möglichkeiten des Gesamtsystems zu stark einzuschränken.

In einer bevorzugten Ausführungsform haben Kompressor-Motor und elektrischer Heizer einen gemeinsamen Gleichspannungs-Zwischenkreis und daran angeschlossene separate Stromversorgungselektroniken. Dies bedeutet, dass Gleichrichter, Überspannungsschutz und andere Eingangsfilter gemeinsam genutzt werden, um den Gleichspannungs-Zwischenkreis zu speisen, dann aber unterschiedliche Bauteile zur weiteren Stromversorgung von Kompressor und Heizelement eingesetzt werden können, die an ihre jeweiligen Aufgaben genau angepasst sind.

Bevorzugt ist der Gleichspannungs-Zwischenkreis für eine Spannung zwischen 400 und 800 V ausgelegt. Dies ist eine für verfügbare Bauteile gut geeignete Spannung.

Ein gemeinsamer Gleichspannungs-Zwischenkreis hat einen weiteren Vorteil, nämlich dass eine Anschlussmöglichkeit für eine Gleichspannungsquelle vorgesehen werden kann. Dies erlaubt z. B. die direkte Nutzung einer Photovoltaikanlage für die Versorgung (Inselbetrieb), insbesondere auch in Verbindung mit einem Stromspeicher (Akkumulatoren). So kann ein Inselbetrieb oder ein Notbetrieb auch bei Ausfall der Wechselstromversorgung aufrechterhalten werden.

Ganz besonders vorteilhaft ist es für hochintegrierte moderne Systeme, wenn der Gleichspannungs-Zwischenkreis mit einem 1- bis 3-phasigen Wechselstrom-Versorgungsnetz über einen bidirektionalen Inverter verbunden ist, der ausgelegt ist, sowohl Strom aus dem Versorgungsnetz in den Gleichspannungs-Zwischenkreis als auch aus dem Gleichspannungs-Zwischenkreis in das Wechselstrom-Versorgungsnetz einzuspeisen. Bei geeigneter Dimensionierung kann in diesem Fall sogar noch ein Inverter einer in der Nähe befindlichen Photovoltaikanlage entfallen, der sonst für die Einspeisung in das Wechselstrom-Versorgungsnetz erforderlich wäre.

In einer besonderen Anwendungsform ist eine Leistungsverteilung vorhanden, die dafür eingerichtet ist, den Kompressor und das elektrische Heizelement so anzusteuern, dass beide zusammen nie mehr als eine von den gemeinsam benutzten Komponenten maximal zur Verfügung stehende elektrische Leistung oder einen maximal zur Verfügung stehenden elektrischen Strom verbrauchen. Dies ist insbesondere dann von Vorteil, wenn die Leistung mindestens einer der gemeinsam benutzten Komponenten nicht für den Betrieb beider Verbraucher ausreicht, ein solcher Bedarf aber dennoch bei vorhandenen Anlagen auftreten kann. In diesem Fall wird dann einem der Verbraucher Vorrang gegeben.

Die Leistungsverteilung ist bevorzugt, aber nicht notwendigerweise Teil einer elektronischen Steuerung der gesamten Wärmepumpenanordnung. In Wärmepumpenanordnungen gibt es meist eine elektronische Steuerung, die u. a. die Leistung von Kompressor und elektrischem Heizelement regelt, so dass hier entsprechende Einschränkungen in der Regelung leicht vorgenommen werden können.

Gemäß einem anderen Aspekt wird auch ein entsprechendes Verfahren zum Betrieb einer Wärmepumpenanordnung vorgeschlagen mit einem Primärkreislauf mit einem Kompressor und einem Sekundärkreislauf und/oder Pufferspeicher mit mindestens einem elektrischen Heizelement, wobei der Kompressor und das Heizelement elektronische Komponenten zu ihrer Stromversorgung und ihrem Betrieb aufweisen, wobei Kompressor und Heizelement mindestens eine der folgenden elektronischen Komponenten gemeinsam benutzen:
(1) einen Gleichrichter zur Gleichrichtung eines 1- bis 3-phasigen Wechselstromes,
(2) einen aktiven Leistungsfaktorkorrekturfilter,
(3) einen Überspannungsschutz,
(4) eine Leistungsverteilung,
(5) einen Gleichspannungs-Zwischenkreis und/oder
(6) einen Zwischenkreis-Kondensator.
wobei eine Leistungsverteilung vorhanden ist, die den Kompressor und das elektrische Heizelement so ansteuert, dass beide zusammen nie mehr als eine von den gemeinsam benutzten Komponenten maximal zur Verfügung stehende elektrische Leistung oder einen maximal zur Verfügung stehenden elektrischen Strom verbrauchen. Dies bedeutet in aller Regel keine Einschränkung im Normalbetrieb einer Wärmepumpenanordnung, verhindert aber eine eventuelle Überlastung elektronischer Bauteile in Ausnahmesituationen. Bei im Stand der Technik bekannten Anlagen musste je nach verfügbarer Anschlussleistung auch eine Begrenzung der maximalen Leistung von Komponenten vorgenommen werden, was oft die Anpassung von Anlagen oder deren Einstellungen an den jeweiligen Standort erforderlich machte. Mit einer erfindungsgemäßen Leistungsverteilung, die im Allgemeinen von einem Mikroprozessor oder dergleichen gesteuert wird, ist eine Anpassung an verschiedene Standortbedingungen oder auch an unterschiedlich dimensionierte Komponenten sehr einfach möglich.

Bevorzugt wird in Ausnahmesituationen bei Erreichen der maximal zur Verfügung stehenden Leistung und weiterem Heizbedarf mindestens ein elektrischer Zusatzheizer zugeschaltet. Ein solcher Zusatzheizer und seine Stromversorgung können sehr einfach aufgebaut und daher kostengünstig sein, weil hier keine Modulation erforderlich ist und daher einfach ein Anschluss an das Wechselstrom-Versorgungsnetz ohne besondere elektronische Bauteile erfolgen kann. Eine eventuell erforderliche Regelung der Heizleistung kann immer noch über das elektrische Heizelement erfolgen

Für einen gemeinsamen Gleichspannungs-Zwischenkreis ist es möglich und sehr vorteilhaft, bei Verfügbarkeit einen Gleichstrom aus einer Gleichstromquelle einzuspeisen. Dies erlaubt z. B. den direkten Anschluss einer Photovoltaikanlage und/oder eines Stromspeichers in Form eines Akkumulators. So können die beiden Komponenten einer Wärmepumpenanordnung, die den meisten Strom verbrauchen, z. B. im sogenannten "Inselbetrieb" mit einer Photovoltaikanlage versorgt werden oder benötigen jedenfalls weniger den von außen zugeführten Strom. Dies kann je nach den gesetzlichen Vorgaben und Vergütungen für eingespeisten Photovoltaik-Strom preisgünstiger sein als eine externe Versorgung.

Bei einer weiteren Ausführungsform wird der Gleichspannungszwischenkreis mit Einspeisung aus einer Gleichstromquelle aus einem 1- bis 3-phasigen Wechselstrom-Versorgungsnetz bei Bedarf über einen bidirektionalen Inverter versorgt wird, der bei Überschuss an Gleichstrom aus der Gleichstromquelle diesen auch in das Versorgungsnetz einspeist. Auf diese Weise kann eine Photovoltaikanlage noch stärker in die Wärmepumpenanordnung eingebunden werden, wobei der bidirektionale Inverter drei der ursprünglich erforderlichen Bauteile (Inverter Photovoltaik, Gleichrichter Kompressor, Gleichrichter Heizelement) ersetzt.

Vorgeschlagen wird auch ein Computerprogramprodukt, umfassend Befehle, die bewirken, dass die beschriebene Vorrichtung die beschriebenen Verfahren ausführt. Dieses Computerprogrammprodukt kann in einer zentralen elektronischen Steuerung (oder als Update davon) eingesetzt werden, um alle Abläufe auf die beschriebene erfindungsgemäße Anordnung abzustimmen.

Ein schematisches Ausführungsbeispiel der Erfindung, auf das diese jedoch nicht beschränkt ist, und die Funktionsweise der erfindungsgemäßen Verfahren werden im Folgenden anhand der Zeichnung näher erläutert. Es stellen dar:
- Fig. 1:: eine Wärmepumpenanordnung in schematischer Darstellung und
- Fig. 2:: elektronische Komponenten einer Wärmepumpenanordnung.

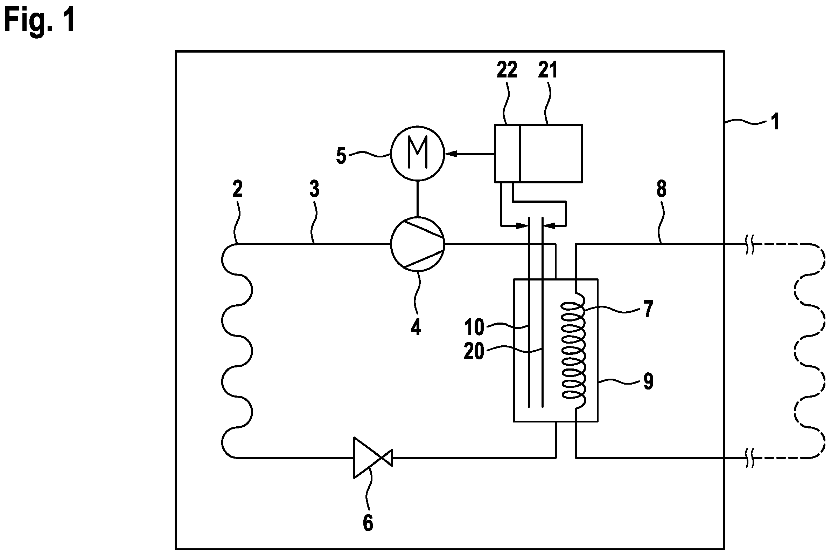

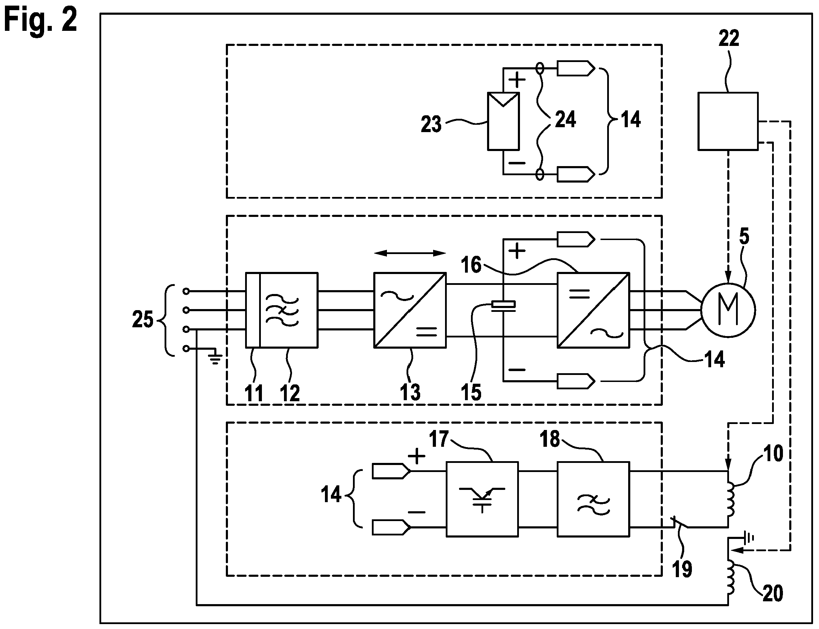

Figur 1 zeigt schematisch und als Anwendungsbeispiel eine Wärmepumpenanordnung 1, bei der über einen Umgebungswärmetauscher 2 Wärme (oder Kälte) in einen Primärkreislauf 3 eingespeist wird. Im Folgenden wird hauptsächlich der Fall beschrieben, in dem die Wärmepumpenanordnung 1 zum Heizen eines nicht dargestellten Gebäudes und/oder von Brauchwasser benutzt wird. Das bedeutet aber nicht, dass die Anordnung im Sommer nicht auch in an sich bekannter Weise zur Kühlung betrieben werden kann. Ein Umgebungs-Wärmetauscher 2 kann Wärme aus der Luft, dem Erdreich oder einem anderen Wärmespeicher entnehmen, je nach seiner Bauart und Auslegung, was aber für die hier vorliegende Erfindung nicht von entscheidender Bedeutung ist. Im Allgemeinen wird die vorliegende Erfindung aber bevorzugt bei Anlagen eingesetzt werden, bei denen Umgebungswärme aus der Luft oder dem Erdreich gewonnen wird. Der Primärkreislauf 3 enthält einen Kompressor 4, der von einem (mit Strom betriebenem) in seiner Leistung modulierbarem Kompressor-Motor 5 angetrieben wird. Es folgen in üblicher Weise ein Wärmetauscher 7 und ein Entspannungsventil 6. Der Primärkreislauf 3 entnimmt der Umwelt Wärme, die im Wärmetauscher 7 an mindestens einen Sekundärkreislauf 8 mit nur gestrichelt angedeuteten Wärmeverbrauchern übertragen wird. Der Wärmetauscher 7 selbst und/oder der Primärkreislauf 3 und/oder der Sekundärkreislauf 8 weisen mindestens einen Pufferspeicher 9 auf, der für eine Vergleichmäßigung der Versorgung des Sekundärkreislaufs 8 mit Wärme sorgt. Für den Fall, dass einmal nicht genügend Wärme aus der Umwelt zur Verfügung steht oder sogar bei Stillstand der Anlage ein Einfrieren des Sekundärkreislaufes 8 verhindert werden soll, ist im Sekundärkreislauf 8 und/oder im Pufferspeicher 9 mindestens ein elektrisches Heizelement 10 vorhanden, welches in seiner Leistung modulierbar sein sollte, damit nur die jeweils erforderliche Leistung eingespeist wird. Ein Zusatzheizer 20 für bestimmte Betriebszustände kann dort ebenfalls vorhanden sein. Eine elektronische Steuerung 21 steuert die einzelnen Abläufe in der Anlage, wobei eine Leistungsverteilung 22, die Teil der elektronischen Steuerung 21 sein kann, dafür sorgt, dass Kompressor-Motor 5 und elektrisches Heizelement 10 zusammen nie mehr Strom verbrauchen als durch zugehörige gemeinsame elektronische Bauteile oder durch eine zugehörige Sicherung zur Verfügung gestellt werden kann. Der Grund dafür ist anhand von Fig. 2 näher erläutert.

Fig. 2 zeigt schematisch die elektronischen Komponenten einer Wärmepumpenanordnung und deren Verschaltung. Der größte Stromverbraucher einer Wärmepumpenanordnung 1 ist im Allgemeinen der Kompressor-Motor 4, welcher im Prinzip aus einem Wechselstrom-Versorgungsnetz 25 mit einer bis drei Phasen versorgt wird. Da allerdings eine Modulation, d. h. eine (stufenlose) Leistungsregelung über einen vorgebbaren Bereich, erwünscht ist, ist ein gewisser Aufwand an elektronischen Bauteilen erforderlich. Daher wird der zur Verfügung stehende Wechselstrom zunächst über einen Gleichrichter 13 in Gleichstrom umgewandelt, der in einen Gleichspannungs-Zwischenkreis 14 eingespeist wird. Die Gleichspannung wird oft durch einen Zwischenkreis-Kondensator 15 geglättet. Über eine Inverter-Ausgangstufe 16 wird der Gleichstrom wieder in Wechselstrom (meist ein Drei-Phasen-Drehstrom) umgewandelt, der den Kompressor-Motor 5 mit der jeweils gewünschten Leistung versorgt. Da diese Art der Elektronik empfindlich ist, gibt es noch einen Überspannungsschutz 11 gegenüber dem Wechselstrom-Versorgungsnetz 25. Außerdem kann eine solche Elektronik unerwünschte Veränderungen und Oberwellen im Wechselstrom-Versorgungsnetz 25 erzeugen, weshalb ein sogenannter Leistungsfaktorkorrekturfilter 12 (auch bekannt als PFC - *Power Factor Correction*), insbesondere als aktiver Filter, zwischen Wechselstrom-Versorgungsnetz 25 und Gleichrichter 13 eingesetzt wird. Solche aktiven Filter, früher nur für Einphasenwechselstrom eingesetzt, sind inzwischen auch für Dreiphasenwechselstrom verfügbar, wenn auch zu höheren Kosten. Ein elektrisches Heizelement 10 würde eigentlich nochmals eine ähnliche Kette von elektronischen Komponenten benötigen, allerdings würde die Versorgung aus einem Gleichspannungs-Zwischenkreis 14 lediglich z. B. einen Transistorschalter 17, einen Ausgangsfilter 18 und einen Temperaturschalter 19 erfordern. Hierbei werden nun einige, bevorzugt alle, der von Kompressor-Motor 5 und Heizelement 10 in gleicher Weise benötigten elektronischen Komponenten gemeinsam benutzt. Der Gleichspannungs-Zwischenkreis 14 stellt für beide Gleichstrom bereit, welcher über einen gemeinsamen Gleichrichter 13 aus dem Wechselstrom-Versorgungsnetz 25 gewonnen wird. Auch Überspannungsschutz 11 und Eingangsfilter 12 (aktives PFC) sind nur einmal vorhanden, ebenso ein eventueller Zwischenkreis-Kondensator 15. Eine gemeinsame Leistungsverteilung 22 kann vorhanden sein, falls Situationen auftreten können, in denen Kompressor-Motor 5 und Heizelement 10 gleichzeitig betrieben werden müssen.

Falls tatsächlich Betriebszustände berücksichtigt werden sollen, bei denen der Kompressor und das Heizelement zusammen mehr als die maximal verfügbare Leistung benötigen würden, kann optional ein Zusatzheizer 20 vorhanden sein, der mit einer sehr einfachen Stromversorgung ohne Modulation auskommt und zusätzlich oder alternativ elektrische Heizleistung liefern kann.

Besonders vorteilhaft kann die Wärmepumpenanordnung in Verbindung mit einer vor Ort vorhandenen Gleichstromquelle 23, insbesondere einer Photovoltaikanlage und/oder einem mit Akkumulatoren betriebenen Speicher, kombiniert werden. Im Gleichspannungs-Zwischenkreis 14 ist dafür ein Anschluss 24 für die Gleichspannungsquelle 23 (die dann die gleiche Spannung wie der Gleichspannungs-Zwischenkreis 14 bereitstellt) vorhanden. Es ist sogar möglich, den Gleichrichter 13 als bidirektionalen Inverter auszubilden mit der Folge, dass dieser einen sonst für eine Photovoltaikanlage erforderlichen Inverter auch noch ersetzen kann. So kann die Wärmepumpenanordnung aus der Photovoltaikanordnung gespeist werden und eventuell noch überschüssiger Strom in das Wechselstrom-Versorgungsnetz 25 eingespeist werden. Dies kann auch besonders sinnvoll sein, wenn im Sommer die Wärmepumpenanlage zur Kühlung eingesetzt wird und gleichzeitig viel Sonnenenergie zur Verfügung steht.

Die vorliegende Erfindung erlaubt es, Wärmepumpenanlagen kostengünstig mit komfortabler Elektronik auszustatten, eine Integration mit vorhandenen Photovoltaiksystemen und/oder Stromspeichern vorzunehmen und bei Weiterentwicklungen und Veränderungen solcher Anlagen auf einfache Weise die Verteilung von verfügbarem Strom auf einzelne Komponenten zu verändern. Photovoltaikanlagen können so durch sogenannten Eigenverbrauch besser genutzt werden, wobei z. B. sogar ein vorhandener Pufferspeicher mit einem elektrischen Heizelement durch bereitstehende Leistung vorsorglich aufgeheizt werden kann, selbst wenn der Anlagenbetrieb dies gerade nicht erforderlich machen würde.

### Bezugszeichenliste

- 1: Wärmepumpenanordnung
- 2: Umgebungs-Wärmetauscher
- 3: Primärkreislauf
- 4: Kompressor
- 5: Kompressor-Motor
- 6: Entspannungsventil
- 7: Wärmetauscher
- 8: Sekundärkreislauf
- 9: Pufferspeicher
- 10: elektrisches Heizelement
- 11: Überspannungsschutz
- 12: Eingangsfilter / Leistungsfaktorkorrekturfilter
- 13: Gleichrichter / bidirektionaler Inverter
- 14: Gleichspannungs-Zwischenkreis
- 15: Zwischenkreis-Kondensator
- 16: Inverter-Ausgangsstufe
- 17: Transistorschalter
- 18: Ausgangsfilter
- 19: Temperaturschalter
- 20: Zusatzheizer
- 21: Elektronische Steuerung
- 22: Leistungsverteilung
- 23: Gleichspannungsquelle
- 24: Anschluss für Gleichspannungsquelle
- 25: Wechselstrom-Versorgungsnetz

## Patentansprüche

1. Wärmepumpenanordnung (1) mit einem Primärkreislauf (3) mit einem Kompressor (4) und einem Sekundärkreislauf (8) und/oder Pufferspeicher (9) mit mindestens einem elektrischen Heizelement (10), wobei der Kompressor (4) und das Heizelement (10) elektronische Komponenten (11, 12, 13, 14, 15, 16, 17, 18) zu ihrer Stromversorgung und ihrem Betrieb aufweisen und wobei Kompressor (4) und Heizelement (10) mindestens eine der folgenden elektronischen Komponenten gemeinsam haben:
(1) einen Gleichrichter (13) zur Gleichrichtung eines 1- bis 3-phasigen Wechselstromes,
(2) einen aktiven Leistungsfaktorkorrekturfilter (12),
(3) einen Überspannungsschutz (11),
(4) eine Leistungsverteilung (22),
(5) einen Gleichspannungs-Zwischenkreis (14) und/oder
(6) einen Zwischenkreis-Kondensator (15).

2. Wärmepumpenanordnung (1) nach Anspruch 1, wobei Kompressor (4) und elektrisches Heizelement (10) separate, an einem gemeinsamen Gleichspannungs-Zwischenkreis (14) angeschlossene Stromversorgungselektroniken (16 bzw. 17, 18, 19) aufweisen.

3. Wärmepumpenanordnung (1) nach Anspruch 2, wobei der Gleichspannungs-Zwischenkreis (14) für eine Spannung zwischen 400 und 800 V [Volt] ausgelegt ist.

4. Wärmepumpenanlage (1) nach Anspruch 2 oder 3, wobei der Gleichspannungs-Zwischenkreis (14) einen Anschluss (24) für eine Gleichspannungsquelle (23) aufweist.

5. Wärmepumpenanordnung (1) nach Anspruch 4, wobei der Gleichspannungs-Zwischenkreis (14) mit einem 1- bis 3-phasigen Wechselstrom-Versorgungsnetz (25) über einen bidirektionalen Inverter (13) verbunden ist, der ausgelegt ist, sowohl Strom aus dem Wechselstrom-Versorgungsnetz (25) in den Gleichspannungs-Zwischenkreis (14) als auch aus dem Gleichspannungs-Zwischenkreis (14) in das Wechselstrom-Versorgungsnetz (25) einzuspeisen.

6. Wärmepumpenanordnung (1) nach einem der vorhergehenden Ansprüche, wobei eine Leistungsverteilung (22) vorhanden ist, die dafür eingerichtet ist, den Kompressor (4) und das elektrische Heizelement (10) so anzusteuern, dass beide zusammen nie mehr als eine von den gemeinsam benutzten Komponenten (11, 12, 13 und/oder 14) maximal zur Verfügung stehende elektrische Leistung oder einen maximal zur Verfügung stehenden Strom verbrauchen.

7. Wärmepumpenanordnung (1) nach Anspruch 6, wobei die Leistungsverteilung (22) Teil einer elektronischen Steuerung (21) der gesamten Wärmepumpenanordnung (1) ist.

8. Wärmepumpenanordnung (1) nach einem der vorhergehenden Ansprüche, wobei mindestens ein elektrischer Zusatzheizer (20) vorhanden ist.

9. Verfahren zum Betrieb einer Wärmepumpenanordnung (1) mit einem Primärkreislauf (3) mit einem Kompressor (4) und einem Sekundärkreislauf (8) und/oder Pufferspeicher (9) mit mindestens einem elektrischen Heizelement (10), wobei der Kompressor (4) und das Heizelement (10) elektronische Komponenten (11, 12, 13, 14, 15, 16, 17, 18) zu ihrer Stromversorgung und ihrem Betrieb aufweisen, wobei Kompressor (4) und Heizelement (10) mindestens eine der folgenden elektronischen Komponenten gemeinsam benutzen:
(1) einen Gleichrichter (13) zur Gleichrichtung eines 1- bis 3-phasigen Wechselstromes,
(2) einen aktiven Leistungsfaktorkorrekturfilter (12),
(3) einen Überspannungsschutz (11),
(4) eine Leistungsverteilung (22),
(5) einen Gleichspannungs-Zwischenkreis (14) und/oder
(6) einen Zwischenkreis-Kondensator (15)
und wobei eine Leistungsverteilung (22) vorhanden ist, die den Kompressor und das elektrische Heizelement (10) so ansteuert, dass beide zusammen nie mehr als eine von den gemeinsam benutzten Komponenten (11, 12, 13 und/oder 14) maximal zur Verfügung stehende elektrische Leistung oder einen maximal zur Verfügung stehenden elektrischen Strom verbrauchen.

10. Verfahren nach Anspruch 9, wobei bei Erreichen der maximal zur Verfügung stehenden Leistung und weiterem Heizbedarf mindestens ein elektrischer Zusatzheizer (20) (9) zugeschaltet wird.

11. Verfahren nach Anspruch 9 oder 10, wobei ein gemeinsamer Gleichspannungs-Zwischenkreis (14) vorhanden ist, in den bei Verfügbarkeit ein Gleichstrom aus einer Gleichspannungsquelle (23) eingespeist wird.

12. Verfahren nach Anspruch 11, wobei der Gleichspannungs-Zwischenkreis (14) aus einem 1- bis 3-phasigen Wechselstrom-Versorgungsnetz (25) bei Bedarf über einen bidirektionalen Inverter (13) versorgt wird, der bei Überschuss an Gleichstrom aus der Gleichspannungsquelle (23) diesen auch in das Wechselstrom-Versorgungsnetz (25) einspeist.

13. Computerprogramprodukt umfassend Befehle, die bewirken, dass die Vorrichtung nach einem der Ansprüche 1 bis 8 das Verfahren nach einem der Ansprüche 9 bis 12 ausführt.
